# EUROPÄISCHE PATENTANMELDUNG

(11) **EP 1 400 777 A1**
(43) Veröffentlichungstag der Anmeldung: **24.03.2004**
(21) Anmeldenummer: 02021358.3
(22) Anmeldetag: 23.09.2002
(51) Int. Cl.: G01B 11/00, G01B 21/04

(54) **Optische Vermessungsvorrichtung**

(71) Anmelder: Metronom GmbH Industrial Measurements, 55120 Mainz (DE)
(72) Erfinder: Blondeau, Jean Dr., 74889 Sinsheim-Dühren (DE)
(74) Vertreter: Grünecker, Kinkeldey, Stockmair & Schwanhäusser Anwaltssozietät

(57) **Zusammenfassung**

Die vorliegende Erfindung betrifft eine optische Vermessungsvorrichtung in Form eines Prüfkörpers mit mindestens 2 Antastformelementen und mit mindestens 1 Verbindungselement zur Verbindung der mindestens 2 Antastformelemente, wobei mindestens 2 Antastformelemente jeweils eine Kamera umfassen.

## Beschreibung

Die Erfindung betrifft eine optische Vermessungsvorrichtung, insbesondere für Triangulationsmessungen.

Triangulationsverfahren werden üblicherweise dazu verwendet, die Position, Positionsveränderungen oder auch Oberflächenstrukturen eines Zielobjektes zu vermessen. Bei photogrammetrischen Verfahren wird das Zielobjekt aus mindestens zwei Blickwinkeln mit Hilfe von Kameras aufgenommen. Durch Vergleich der resultierenden Bilder lässt sich dann die Position und/oder Oberflächenstruktur des Objekts bestimmen. Die Aufnahmen können dabei mit einer Kamera gemacht werden, die an verschiedene Raumpositionen gebracht wird. Alternativ können mehrere Kameras verwendet werden, die in bestimmten Abständen voneinander angeordnet sind. Diese Kameras können beispielsweise starr miteinander verbunden sein. Entsprechende photogrammetrische Vorrichtungen finden Anwendung in verschiedensten Bereichen, dies reicht von der Vermessung kleinster Oberflächenstrukturen auf Werkstoffen bis hin zur Geodäsie.

Ein Nachteil der aus dem Stand der Technik bekannten Vorrichtungen zur photogrammetrischen Vermessung besteht darin, dass die relativen Aufnahmepositionen, d.h. die Positionen der Kameras, mit einer großen Ungenauigkeit behaftet sind. Falls insbesondere mehrere Kameras starr miteinander verbunden sind, ändern sich ihre relativen Abstände mit verändernden Umgebungsparametem (bspw. Temperatur- und/oder Luftfeuchtigkeit). Die bekannten Vermessungsvorrichtungen, die aus starr miteinander verbundenen Kameras bestehen, sind außerdem zur mobilen Verwendung ungeeignet, da die relativen Kamerapositionen nach einem Aufbau immer langwierig kalibriert werden müssen.

Es ist daher Aufgabe der Erfindung, die genannten Nachteile zu überwinden, und eine optische Vermessungsvorrichtung bereitzustellen, die eine photogrammetrische Triangulation mit hoher Genauigkeit erlaubt und auch zur mobilen Verwendung geeignet ist.

Erfindungsgemäß wird diese Aufgabe gelöst durch eine optische Vermessungsvorrichtung in Form eines Prüfkörpers mit mindestens zwei Antastformelementen und mit mindestens einem Verbindungselement zu Verbindung der mindestens zwei Antastformelementen und mit mindestens einem Verbindungselement zur Verbindung der mindestens zwei Antastformelemente, wobei mindestens zwei Antastformelemente jeweils eine Kamera umfassen.

Prüfkörper dienen üblicherweise zur Überwachung von räumlich positionierenden oder messenden Systemen und sind daher auf eine hohe Abstandsgenauigkeit bei Standardmessbedingungen ausgelegt. Insbesondere weist der Abstand zwischen jeweils zwei Antastformelementen bei Standardmessbedingungen eine hohe Genauigkeit auf. Durch die Konstruktion einer optischen Vermessungsvorrichtung in Form eines Prüfkörpers wird somit erreicht, dass der Abstand zwischen den Kameras der Vermessungsvorrichtung bei Standardmessbedingungen einen geringen Fehler besitzt. Prüfkörper, die zur Überwachung von mobilen Koordinatenmesssystemen verwendet werden, sind außerdem so konstruiert, dass sie beim Aufbau kaum oder gar nicht kalibriert werden müssen. Diese Eigenschaft wird somit erfindungsgemäß auch für die optische Vermessungsvorrichtung erreicht.

Gemäß einer bevorzugten Weiterbildung ist jede Kamera in ein Antastformelement eingelassen, insbesondere so, dass sich ihr optisches Zentrum im Mittelpunkt des Antastformelements befindet. Dadurch kann erreicht werden, dass die relativen Positionen der optischen Zentren der Kameras mit hoher Genauigkeit bestimmt werden können und somit auch die Punkte von welchen aus das Zielobjekt aufgenommen wurde. Daraus ergibt sich auch eine höhere Genauigkeit der Messung, wodurch die Qualität der Bilddaten weiter verbessert wird.

Vorzugsweise umfasst jede Kamera einen Halbleitersensor, insbesondere einen CCD-Sensor. Dadurch wird insbesondere erreicht, dass die gemessenen Intensitäten direkt digital weiterverarbeitet werden können.

Gemäß einer vorteilhaften Weiterbildung ist jede Kamera als Lochkamera ausgebildet. Eine solche Kamera ist einfach herzustellen und bedarf wenig Wartung. Die Abmessungen der Kamera, insbesondere der Lochdurchmesser, können so gewählt werden, dass das Zielobjekt in die Beugungsebene abgebildet wird. Somit erhält man ein Diffraktionsbild des Zielobjekts. Dies ist insbesondere von Vorteil, wenn Punktlichtquellen, beispielsweise Leuchtdioden, als Zielobjekte gewählt werden. Das entsprechende Diffraktionsbild ist rotationssymmetrisch (kreissymmetrisch). Die Position der Lichtquellen kann über den Mittelpunkt des Diffraktionsbildes, beispielsweise mit Hilfe von Bildverarbeitungsalgorithmen bestimmt werden. Insbesondere bei der Verwendung von digitalen Halbleitersensoren kann dadurch eine höhere Genauigkeit als die Pixelauflösung erzielt werden.

Gemäß einer vorteilhaften Alternative umfasst jede Kamera eine fixe Optik. Auf diese Weise kann die gemessene Intensität erhöht werden. Dies ist insbesondere von Vorteil, wenn die Zielobjekte eine endliche Ausdehnung haben (z. B. leuchtende oder matte Kugeln). Auch hier kann die Genauigkeit mit Hilfe eines Bildverarbeitungsverfahrens gegenüber der Pixelauflösung verbessert werden.

Um die Stromversorgung zu gewährleisten, ist es von Vorteil, wenn jede Kamera eine Spannungsquelle, insbesondere einen Akkumulator, umfasst. Das Aufladen eines Akkumulators kann beispielsweise induktiv erfolgen. Gemäß einer vorteilhaften Alternative kann jede Kamera auch mit einer externen Spannungsquelle verbunden sein.

Gemäß einer vorteilhaften Weiterbildung aller bisher beschriebenen optischen Vermessungsvorrichtungen ist jedes Antastformelement über ein Befestigungselement mit einem Verbindungselement verbunden, wobei das Material, die Form und/oder die Bemessung der Antastformelemente, der Verbindungselemente und der Befestigungselemente derart aufeinander abgestimmt sind, dass der Abstand zwischen jeweils zwei Antastpunkten bei Standardmessbedingungen im Wesentlichen konstant ist. Dies bedeutet, dass Material, Form und/oder Bemessung der Antastformelemente, der Verbindungselemente und der Befestigungselemente so gewählt werden, dass Längenveränderungen derselben, beispielsweise durch Temperatur- und/oder Luftfeuchtigkeitsänderungen, bei Standardmessbedingungen kompensiert werden und der Abstand zwischen jeweils zwei Antastpunkten konstant bleibt. Auf diese Weise kann eine hohe Genauigkeit der photogrammetrischen Vermessung erzielt werden.

Gemäß einer ersten, vorteilhaften Alternative kann für die Befestigungselemente ein Material gewählt werden, das sich bei Standardmessbedingungen praktisch nicht ausdehnt. Entsprechend können das Material und die Abmessungen der Verbindungselemente derart gewählt werden, dass sich bspw. Ausdehnungen der Antastformelemente, von denen mindestens zwei jeweils eine Kamera umfassen, durch Kontraktionen der Verbindungselemente kompensiert werden. Falls die Antastformelemente also bspw. einen positiven Ausdehnungskoeffizienten aufweisen, umfasst die Verbindungselemente ein Material mit einem negativen Ausdehnungskoeffizienten, wobei die Abmessungen so abgestimmt sind, dass die Ausdehnung der einen durch eine Kontraktion der anderen kompensiert wird.

Gemäß einer weiteren, vorteilhaften Alternative werden die Befestigungselemente der optischen Vermessungsvorrichtung derart gewählt, dass Längenveränderungen der mindestens zwei Antastformelemente und/oder des mindestens einen Verbindungselementes durch jedes Befestigungselement derart kompensiert werden, dass der Abstand zwischen jeweils zwei Antastpunkten bei Standardmessbedingungen im Wesentlichen konstant ist.

Der Vorteil einer solchen optischen Vermessungsvorrichtung besteht darin, dass Längenveränderungen der Antastformelemente und/oder der Verbindungselemente durch die Befestigungselemente kompensiert werden. Dadurch kann eine hohe Genauigkeit bei der Photogrammetrie erreicht werden. Außerdem können Material und/oder Abmessungen der Antastformelemente und der Verbindungselemente weitgehend frei gewählt werden. Falls für ein Befestigungselement ein teures Material mit einem negativen Wärmeausdehnungskoeffizienten gewählt wird, ist die erforderliche Materialmenge wesentlich geringer, als wenn ein ganzes Verbindungselement daraus gefertigt werden müsste. Somit ergibt sich bei einer solchen optischen Vermessungsvorrichtung eine wesentlich größere Flexibilität in der Wahl der Materialien und/oder Bemessungen; zusätzlich können die Herstellungskosten verringert werden.

Vorzugsweise umfasst jedes Befestigungselement einer der beschriebenen Vermessungsvorrichtungen ein Material mit einem positivem oder negativem thermischen Längeausdehnungskoeffizienten und ist die Form und/oder Bemessung jedes Befestigungselementes so gewählt, dass Längenänderungen jedes Antastformelementes und/oder jedes Verbindungselementes bei Standardmessbedingungen kompensiert werden.

Also kann beispielsweise bei Antastformelementen und Verbindungselementen mit positiven thermischen Längenausdehnungskoeffizienten auch jedes Befestigungselement ein Material mit einem positiven Längenausdehnungskoeffizienten umfassen. Die Form und/oder Bemessung des Befestigungselements kann dann so gewählt werden, dass bei einer positiven Temperaturänderung bei Standardmessbedingungen die Längendilatationen der Antastformelemente und/Verbindungselemente kompensiert werden. In diesem Fall entfällt somit die Verwendung von teuren Materialien mit negativem Wärmeausdehnungskoeffizienten.

Gemäß einer vorteilhaften Weiterbildung der vorher beschriebenen Vermessungsvorrichtungen umfasst jedes Befestigungselement ein erstes Teilelement aus einem ersten Material und ein zweites Teilelement aus einem zweiten Material, wobei jedes Befestigungselement derart an dem Verbindungselement angeordnet ist und die Form und/oder Bemessung der beiden Teilelemente so gewählt ist, dass Längenänderungen jedes Antastformelements und/oder jedes Verbindungselements bei Standardmessbedingungen kompensiert werden.

Auf diese vorteilhafte Weise ist es möglich, durch ein Befestigungselement, das ein Material mit einem positiven Wärmeausdehnungskoeffizienten umfasst, Längenveränderungen von Antastformelementen und/oder Verbindungselementen mit positivem Wärmeausdehnungskoeffizienten zu kompensieren.

Gemäß einer vorteilhaften Weiterbildung wird das erste Teilelement als Hohlkörper, insbesondere in Form einer Hülse, ausgebildet. Damit kann ein einfacher Mechanismus zur Kompensation von Längenveränderungen der Verbindungselemente und Antastformelemente erhalten werden. Das Befestigungselement kann bspw. auf dem Verbindungselement oder auch innerhalb des Verbindungselements oder um das Verbindungselement herum angeordnet sein.

Vorzugsweise sind die Verbindungselemente einer Vermessungsvorrichtung stabförmig ausgebildet. Damit ist in einfacher Weise eine Kontrolle der Längenveränderungen möglich. Außerdem kann in diesem Fall bereits ein vergleichsweise grobes Positionieren der Verbindungselemente zu relativ genauen Positionen der Antastformelemente zueinander führen.

Vorzugsweise werden die Befestigungselemente so mit den Verbindungselementen verbunden, dass einerseits eine genaue und feste Positionierung erreicht werden kann, andererseits aber auch bei Längendilatationen oder -kontraktonen übemäßige Spannungen oder Sprengeffekte in den Materialien vermieden werden. Das Verbinden kann bspw. durch Verkleben oder Hartlöten erreicht werden.

Vorteilhafterweise sind die Antastformelemente kugelförmig ausgebildet. Die Mittelpunkte oder Schwerpunkte der Antastformelemente, in diesem Fall der Kugeln, können vorteilhafterweise auf den Verlängerungen der Achsen der stabförmigen Verbindungselemente liegen. Auf diese Weise kann die relative Position der Antastformelemente bzw. der Antastpunkte mit hoher Genauigkeit festgelegt werden.

Gemäß einer vorteilhaften Weiterbildung können die Abschnitte der Befestigungselemente, insbesondere die Endflächen, an denen die Antastformelemente angebracht werden, kegelförmig, vorzugsweise dem Radius der kugelförmigen Antastformelemente angepasst, ausgebildet werden. Dies führt dazu, dass die Positionierungsgenauigkeit der Antastformelemente bezüglich der Befestigungs- und -verbindungselemente weiter gesteigert werden kann.

Es ist von Vorteil, wenn die Antastformelemente und die Befestigungselemente miteinander lösbar verbindbar sind. Gemäß einer bevorzugten Weiterbildung wird die lösbare Verbindung durch Magnetkräfte realisiert. Hierdurch wird ein Mechanismus zur Verfügung gestellt, der ein besonders einfaches Montieren und Demontieren der Vermessungsvorrichtung erlaubt und damit einen vereinfachten Transport der Vermessungsvorrichtung an ihren Einsatzort ermöglicht.

Zur Ausbildung der magnetischen Verbindung können die Befestigungselemente Magnete umfassen. Diese können bspw. in dem Befestigungselement verklebt oder angelötet angeordnet sein. Bei dieser Weiterbildung können die Antastformelemente aus magnetischem Material bestehen oder ebenfalls Magnete aufweisen.

Vorzugsweise bilden bei einem der beschriebenen optischen Vermessungsvorrichtungen die Verbindungselemente die Kanten und die Antastformelemente die Ecken eines Polyeders, insbesondere eines Tetraeders. Eine solche Vermessungsvorrichtung kann auf einfache Weise montiert und wieder demontiert werden. Die Verwendung einer Tetraederform hat insbesondere den Vorteil, dass Abweichungen von der idealen Tetraederform nur einen sehr geringen Fehler bei den relativen Abständen der Antastformelemente und somit auch der Kameras verursachen.

Die Erfindung stellt außerdem ein optisches Vermessungssystem mit einer optischen Vermessungsvorrichtung der oben beschriebenen Art und einer Auswertevorrichtung bereit, wobei die aufgenommenen Daten der Kameras von der optischen Vermessungsvorrichtung an die Auswertevorrichtung übertragen und dort ausgewertet werden. Die Daten können beispielsweise über eine feste Verbindung von der optische Vermessungsvorrichtung an die Auswertevorrichtung übertragen werden. Gemäß einer vorteilhaften Alternative werden die aufgenommenen Daten per Funk an die Auswertevorrichtung übertragen.

Gemäß einer weiteren vorteilhaften Alternative ist in jedes Antastformelement bereits eine Auswertevorrichtung integriert. Somit können die Daten bereits in jedem Antastformelement ausgewertet werden.

Weitere Merkmale der Erfindung werden anhand der Zeichnungen beschrieben. Dabei zeigt
- Figur 1: eine schematische Abbildung einer erfindungsgemäßen optischen Vermessungsvorrichtung, und
- Figur 2: eine schematische Abbildung einer Lochkamera in einem Antastformelement.

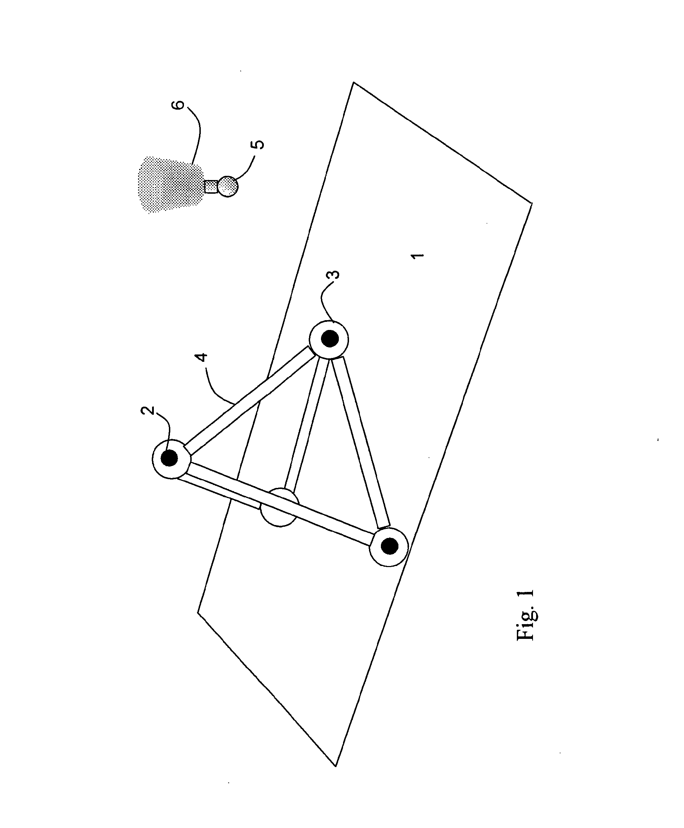

Die erfindungsgemäße optische Vermessungsvorrichtung kann auf verschiedenste Weise verwendet werden. Figur 1 zeigt eine optische Vermessungsvorrichtung in Form eines tetraedrischen Prüfkörpers, die sich auf einem Maschinenbett 1 befindet. Der Prüfkörper umfasst vier Verbindungselemente 4, die die Kanten des Tetraeders bilden, sowie vier Antastformelemente 3, die die Ecken des Tetraeders bilden. Drei Antastformelemente umfassen Kameras 2, die in die Antastformelemente eingelassen sind. In der gezeigten Aufstellung ist das Zielobjekt eine Kugel 5, die sich in der Werkzeughalterung 6 einer Bearbeitungsmaschine befindet. Die Kugel ist entweder selbstleuchtend oder wird angestrahlt, beispielsweise mit einem Laserpointer.

Gemäß einer anderen Alternative kann die optische Vermessungsvorrichtung auch als Käfig (in Form eines Polyeders) über einer Produktionslinie (beispielsweise in der Automobilindustrie oder Flugzeugindustrie) aufgebaut werden. Die Länge der Verbindungselemente kann dann im Bereich von einigen Metern liegen. Mit Hilfe von Laserpointem oder anderen Strahlungsquellen, die beispielsweise fix installiert sind oder von einem Roboterarm geführt werden, können Leuchtpunkte auf Objekte (beispielsweise Werkstücke) abgebildet werden, so dass durch die Aufsicht mehrerer Kameras deren Position mit hoher Genauigkeit bestimmt werden kann. Die Position der Leuchtpunkte kann absolut bestimmt werden, wenn zusätzlich weitere Kameras (oder auch die gleichen Kameras) der optischen Vermessungsvorrichtung feste Referenzpunkte außerhalb des Messbereichs beobachten. Diese Referenzpunkte können beispielsweise durch Leuchtdioden gebildet werden, die entlang der Produktionslinie angeordnet sind. Die gemessenen Bilddaten können bei der Steuerung der Produktionslinie verwendet werden.

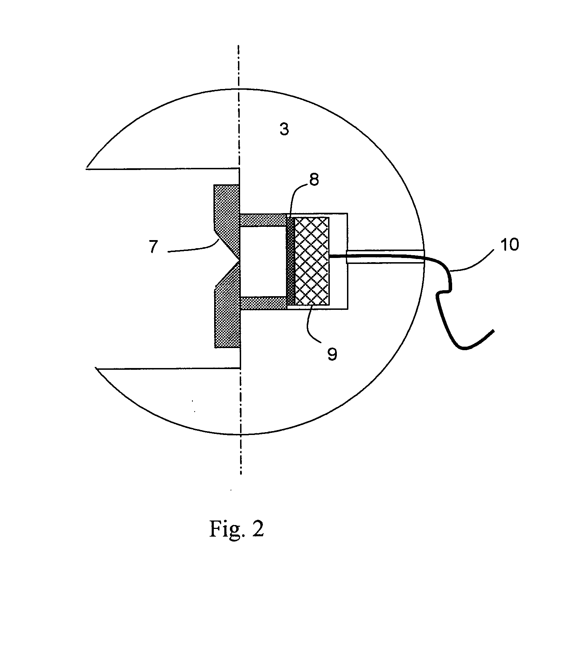

Figur 2 zeigt in schematischer Form ein Ausführungsbeispiel einer Lochkamera in einem kugelförmigen Antastelement 3. Die optische Gruppe, die einen CCD-Sensor 8, eine Lochplatte 7 und einen Elektronikbaustein 9 umfasst, kann außerhalb der Kugel vorgefertigt und in sich justiert werden. Die Kugel 3 wird so gebohrt und/oder gefräst, dass das Kameramodul formschlüssig eingebracht werden kann und exakt auf den Kugelmittelpunkt zentriert ist. Das optische Zentrum der Kamera befindet sich im Kugelmittelpunkt. Von außen wird ein Anschluss 10 an die Kamera herangeführt, mit dessen Hilfe die Stromversorgung gewährleistet wird. Dieser Anschluss kann auch dazu dienen, die aufgenommenen Bilddaten an eine Auswertevorrichtung (nicht gezeigt) zu übertragen.

Die kugelförmigen Antastformelemente haben häufig einen Durchmesser von etwa 38 Millimetern; entsprechend können CCD-Sensoren mit einer Diagonalen von etwa 7 Millimetern oder etwa 12 Millimetern verwendet werden. Diese Maße sind allerdings rein beispielhaft zu verstehen.

## Patentansprüche

1. Optische Vermessungsvorrichtung in Form eines Prüfkörpers mit mindestens zwei Antastformelementen und mit mindestens einem Verbindungselement zur Verbindung der mindestens zwei Antastformelemente, wobei mindestens zwei Antastformelemente jeweils eine Kamera umfassen.

2. Optische Vermessungsvorrichtung nach Anspruch 1, in welchem jede Kamera in ein Antastformelement eingelassen ist, insbesondere so, dass sich ihr optisches Zentrum im Mittelpunkt des Antastformelements befindet.

3. Optische Vermessungsvorrichtung nach Anspruch 1 oder 2, in welcher jede Kamera einen Halbleitersensor, insbesondere einen CCD-Sensor, umfasst.

4. Optische Vermessungsvorrichtung nach einem der vorangegangenen Ansprüche, in welcher jede Kamera als Lochkamera ausgebildet ist.

5. Optische Vermessungsvorrichtung nach einem der Ansprüche 1 - 3, in welcher jede Kamera eine fixe Optik umfasst.

6. Optische Vermessungsvorrichtung nach einem der vorangegangenen Ansprüche, in welcher jede Kamera eine Spannungsquelle, insbesondere einen Akkumulator, umfasst.

7. Optische Vermessungsvorrichtung nach einem der vorangegangenen Ansprüche, in welcher jedes Antastformelement über ein Befestigungselement mit einem Verbindungselement verbunden ist, wobei das Material, die Form und/oder die Bemessung der Antastformelemente, der Verbindungselemente und der Befestigungselemente derart aufeinander abgestimmt sind, dass der Abstand zwischen jeweils zwei Antastpunkten bei Standardmessbedingungen im wesentlichen konstant ist.

8. Optische Vermessungsvorrichtung nach einem der vorangegangenen Ansprüche, in welcher die Verbindungselemente die Kanten und die Antastformelemente die Ecken eines Polyeders, insbesondere eines Tetraeders, bilden.

9. Optisches Vermessungssystem mit einer optischen Vermessungsvorrichtung nach einem der vorangegangenen Ansprüche und einer Auswertevorrichtung, wobei die aufgenommenen Daten der Kameras von der optischen Vermessungsvorrichtung an die Auswerteeinrichtung übertragen und dort ausgewertet werden.

10. Optisches Vermessungssystem nach Anspruch 9, in welchem die aufgenommenen Daten per Funk an die Auswertevorrichtung übertragen werden.
